# EUROPEAN PATENT SPECIFICATION

(11) **EP 3 288 197 B1**
(45) Date of publication and mention of the grant of the patent: **15.06.2022**
(21) Application number: 16185259.5
(22) Date of filing: 23.08.2016
(51) Int. Cl.: H04J 3/06, G06F 1/14

(54) **SYSTEM AND METHOD OF SYNCHRONIZING CLOCKS IN A COMPUTER NETWORK**
SYSTEM UND VERFAHREN ZUR SYNCHRONISIERUNG VON TAKTEN IN EINEM COMPUTERNETZWERK
SYSTÈME ET PROCÉDÉ DE SYNCHRONISATION D'HORLOGES DANS UN RÉSEAU INFORMATIQUE

(43) Date of publication of application: 28.02.2018
(73) Proprietor: Robert Bosch GmbH, 70442 Stuttgart (DE)
(72) Inventor: DIARRA, Aboubacar, 70469 Stuttgart-Feuerbach (DE)

(56) References cited:
- WO-A1-2013/189536
- CN-A- 103 490 840
- US-A1- 2013 163 617
- US-A1- 2016 124 459

## Description

### Background

The invention relates to a system and method of synchronizing clocks in a computer network.

Synchronizing clocks in a computer network is performed for example using the precision time protocol well-known as PTP.

At the start-up of the computer network a single time base is established, and a grandmaster sends "Sync" messages to network notes comprising clocks configured as slaves. The network notes receive the "Sync" message and correct the clock in conformity with a reference time provided in the "Sync" message to establish the single time base throughout the computer network.

Time synchronization to the single time base is necessary in heterogeneous in-vehicle time and safety critical networks and other industrial networks. For certain applications, such as event data recording or system analysis, it is however desirable to synchronize to a plurality of time bases.

WO 2013/189536 A1 discloses an apparatus and method for synchronization in a computer network. US 2013/0163617 A1 discloses a multi-protocol I/O interconnect time synchronization.

### Disclosure of the invention

It is therefore a goal to reduce the load on a computer network with a plurality of time bases and with a reliable and robust time synchronization mechanism.

This is achieved by a method according to claim 1 and by a corresponding system according to claim 9.

Consequently, the first synchronization information indicates a first time and a second time according to a first time base and according to a second time base of respective clocks of the first grandmaster respectively, and the second synchronization information indicates a third time according to the first time base of a respective clock of the second grandmaster. Depending on the domain the grandmaster is located in, the subset defines the recipients configurable for receiving the respective time for synchronizing. Sending the first time and second time in a single message reduces the overhead as only one synchronization message is sent. Sending only the third message reduces the size of the message. Both ways the load on the computer network is reduced, as messages matching to the requirements of the respective grandmaster are sent in a respective domain.

Advantageously the first grandmaster receives the second synchronization information addressed to the first grandmaster. This allows distributing synchronization information between grandmasters in two domains identified by the respective subset.

Advantageously the information about the subset of grandmasters replaces a domainNumber field according to IEEE 1588-2008 in a corresponding precision time protocol. This provides an implementation in a message header of well-defined standard messages for using a plurality of grandmasters with a plurality of clocks of different time bases.

Advantageously the information about the subset of grandmasters comprises an indication for a number of subsets existing in the computer network. This gives information about the field length used for identifying domains and hence improves the implementation in the standard messages by allowing easier processing.

Advantageously a first port of the first grandmaster for sending or a second port of the first grandmaster for receiving synchronization information is configured as master port for sending or slave port for receiving synchronization information depending on a time base indicated by a clock of the first grandmaster. Two different time scales can be synchronized this way in a reliable manner, e.g. to establish a common time base in absolute time, e.g. universal time, and relative time, e.g. time passed since the start of the computer network.

Advantageously the first grandmaster sends the first synchronization information addressed to the grandmasters of the first subset of grandmasters, the second grandmaster sends the second synchronization information to the second subset of grandmasters, and a third grandmaster sends a third synchronization information to a third subset of grandmasters, wherein a first port for sending or a second port for receiving synchronization information is configured as master port for sending or slave port for receiving synchronization information, wherein the configuration depends on the time base. This increases the flexibility for configuring the computer network.

Advantageously the third synchronization information indicates a third time according to the second time base of a respective clock of the second grandmaster. This increases the reliability, as the third time may be used in confirming second time according to the respective clock of the first grandmaster.

Advantageously a configuration of at least one port of a respective grandmaster is selected for sending or receiving from the states:
Master port in first time base and Master port in second time base,
Master port in first time base; Slave port in second time base,
Master port in first time base; Master and Slave port in second time base,
Slave port in first time base; Master port in second time base,
Slave port in first time base and second time base,
Slave port in first time base; Master and Slave port in second time base,
Master and Slave port in first time base; Master port in second time base,
Master and Slave port in first time base; Slave port in second time base,
Master and Slave port in first time base; Master and Slave port in second time base,
Master port in in first time base,
Slave port in in first time base,
Master port in second time base,
Slave port in second time base.

The grandmasters may provide a plurality of ports or only the required number of ports, i.e. as many ports as different clocks are provided.

Configuration of the ports can thus flexibly be selected according to the needs.

Unused ports may be disabled.

A corresponding computer readable medium comprises computer executable instructions for performing the method.

Further aspects of the invention will become apparent by consideration of the detailed description and accompanying drawings.

Embodiments of the present invention are illustrated by way of example referencing the figures by the accompanying drawings, in which like references indicate similar elements and in which
- Figure 1: shows part of a computer network,
- Figure 2: shows schematically message transmission between four grandmasters,
- Figure 3: shows schematically an example of a synchronization message header.

In the following description, numerous specific details are introduced to provide a thorough understanding of, and enabling description for, embodiments of the suggested method of clock synchronization. One skilled in the art, however, will recognize that these embodiments can be practiced without one or more of the specific details, or with other components, systems, etc.

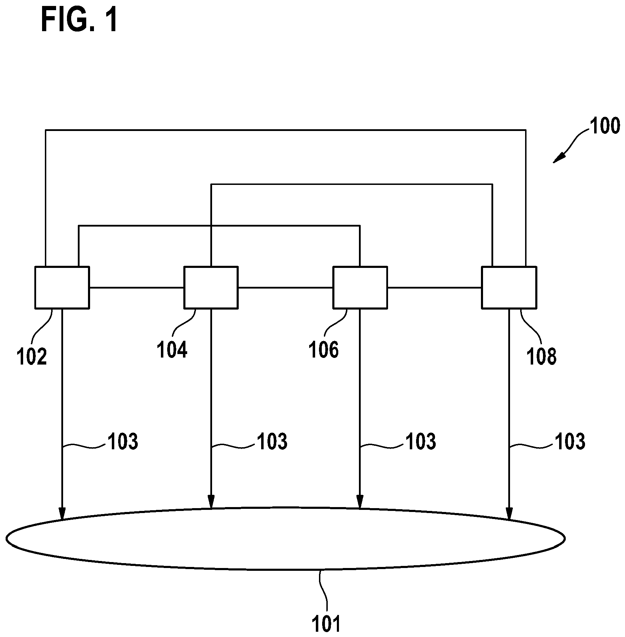

Figure 1 depicts a part of a computer network 100. The computer network 100 may be an in-vehicle network that connects different electronic control units providing various features for operating the vehicle. The computer network 100 may also connect other electronic control units that provide features in the industrial field, for example for operating production lines. These are depicted schematically as slaves 101 connected to grandmasters by data links 103 depicted as solid lines.

The computer network 100 according to figure 1 comprises a first grandmaster 102, a second grandmaster 104, a third grandmaster 106, and a fourth grandmaster 108. The computer network 100 is not limited to four grandmasters. The computer network 100 comprises a plurality of grandmasters or less than four grandmasters.

The grandmasters are connected by data links depicted in figure 1 as solid lines in the example of figure 1 the grandmasters are each connected to each other grandmaster by a separate data link.

The connection between grandmasters 102, 104, 106, 108 and/or from there to slaves 101 may not be direct links. Instead or additionally indirect links between two grandmasters via another grandmaster or to the slaves 101 via other devices may be implemented.

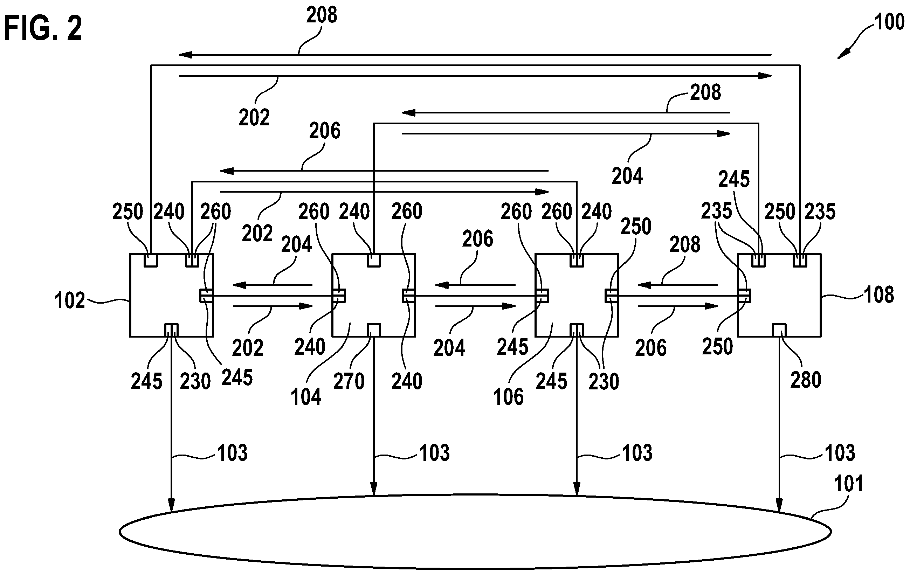

Figure 2 shows schematically message transmission for synchronizing between the four grandmasters 102, 104, 106, 108. Messages for synchronizing the slaves 101 are also sent but not depicted. Synchronization messages are in the example generally transmitted between the grandmasters 102, 104, 106, 108 and/or from there to the slave according to IEEE 802.1 AS-2011.

Data transmission is on the physical layer and/or the data link layer according to the Ethernet protocol, in particular by means of IEEE 802.1 AS-2011 protocol, well-known as GPTP, Ethernet AVB. Additionally, a mechanism to improve the fault tolerant behavior of GPTP clock synchronization with two or more time masters in an Ethernet based network may be implemented.

By use of "Sync" messages according to the Ethernet AVB protocol, a common time base is established between a plurality of grandmasters. This is depicted in figure 2.

Advantageously, a configuration of at least one port of a respective grandmaster is selected for sending or receiving "Sync" messages. The configuration may be selected dynamically or before the start of the computer network from the following states. Ports of the same configuration are labelled with the same reference signs in the respective grandmasters.

The grandmasters provide time in a first time base trel or a second time base tabs or both. To that end the respective grandmaster comprises a respective clock. For sending of "Sync" messages, a grandmaster comprises a master port, for receiving "Sync" messages the grandmaster comprises a slave port. For each of the time base, a port may be configured as master and/or slave according to one of the states:
Master port 230 in a first time base trel and Master port 245 in second time base tabs,
Master port 230 in first time base trel; Slave port 240 in second time base tabs,
Master port 230 in first time base trel; Master and Slave port 250 in second time base tabs,
Slave port 235 in first time base trel; Master port 245 in second time base tabs,
Slave port in in first time base trel and second time base tabs,
Slave port 235 in first time base trel; Master and Slave port 250 in second time base tabs,
Master and Slave port 260 in first time base trel; Master port 245 in second time base tabs,
Master and Slave port 260 in first time base trel; Slave port 240 in second time base tabs,
Master and Slave port 260 in first time base trel; Master and Slave port 250 in second time base tabs,
Master port 270 in in first time base trel,
Slave port in in first time base trel,
Master port 280 in second time base tabs,
Slave port in second time base tabs.

Information about subsets of grandmasters is defined. In the example three types of grandmasters are define: grandmasters contributing only to the establishment of the first time base trel, e.g. a relative time base, in the example the second grandmaster 104; grandmasters contributing only to the establishment of the second time base tabs, e.g. absolute time base, in the example the fourth grandmaster 108; and grandmasters contributing to establishment of both first and second, e.g. relative and absolute, time base trel, tabs. In the example two subsets of grandmasters are defined: a first subset for the first time base trel, e.g. relative time base, and a second subset for second time base tabs, e.g. absolute time base. Information about the subset identifies the subset. For example a single byte is used in a field for identifying a specific subset with a unique byte order. Any other size or type of identifying the subsets may be used as well. In the example each grandmaster is adapted to map subset identifiers to identifiers for grandmasters.

The information about the subset replaces in the example a domainNumber field according to IEEE 1588-2011 in a corresponding precision time protocol synchronization message. The information about the subset of grandmasters may comprise an indication for a number of subsets existing in the computer network. Preferably this information has the size of a byte and is placed in the header of a synchronization message "Sync" at the starting address of the domainNumber field. Synchronization information send by a grandmaster accordingly comprises the domainNumber field and any further information according to IEEE 1588-2011.

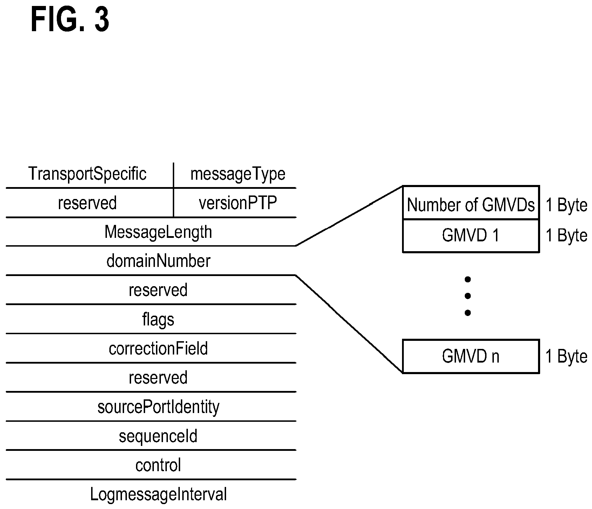

Figure 3 depicts a corresponding message header according to an example.

Different sizes of the fields may be used as well as different identifiers and protocols. The information about the meaning of the bits in the message is implemented in the corresponding grandmasters. In particular the ports for sending and/or receiving are adapted to process this additional header appropriately.

Accordingly a first port 260 of the first grandmaster 102 for sending or a second port 245 of the first grandmaster 102 for receiving synchronization information is configured as master port 260 for sending or slave port 245 for receiving synchronization information depending on a time base indicated by a clock of the first grandmaster 102. In the example the first grandmaster 102 comprises a first clock for indication time according to the first time base trel and a second clock for indicating the time according to the second time base tabs.

A method of synchronizing is described below referencing figure 2.

Accordingly the first grandmaster 102 sends a first synchronization information 202 addressed to at least the second grandmaster 104, wherein the synchronization information comprises information about a first subset of grandmasters 104, 106, 108 configured to receive the first synchronization information.

In the example the first synchronization information 202 indicates a first time and a second time according to a first time base trel and according to a second time base tabs of respective clocks of the first grandmaster 102 respectively.

In the example a second synchronization information 204 indicates a third time according to the first time base trel of a respective clock of the second grandmaster 104.

Accordingly the first grandmaster 102 receives the second synchronization information 204 addressed to the first grandmaster 102, wherein the second synchronization information 204 includes information about a second subset of grandmasters 102, 106, 108 configured to receive the first synchronization information.

The first grandmaster 102 sends the first synchronization information 202 addressed to the grandmasters 104, 106, 108 of the first subset of grandmasters 104, 106, 108, the second grandmaster 104 sends the second synchronization information 204 to the second subset of grandmasters 102, 106, 108, and the fourth grandmaster 108 sends a third synchronization information 208 to a third subset of grandmasters 102, 104, 106.

In the example the third synchronization information 208 indicates a third time according to the second time base tabs of a respective clock of the second grandmaster 104.

Preferably the first port for sending or the second port for receiving synchronization information is configured as master port for sending or slave port for receiving synchronization information, wherein the configuration depends on the time base of the synchronization information the respective port is intended for.

Preferably in this configuration a prior common time base is established between all grandmasters at computer network start up for each of the time bases. The grandmasters are preferably configured to send synchronization messages towards slaves 101, e.g. network nodes configured as slaves, so that they correct their clock deviations accordingly.

Preferably, for each time base, a port has either a master role or a slave role. Preferably for each time base, synchronization messages are transmitted via ports with the master role and are received via ports with slave role. They may be transmitted and received on ports having both master and slave roles.

Additionally or alternatively to "Sync" messages alone, also "Sync" messages may be used in combination with corresponding "Follow_Up" and "Path_Delay" messages according to the precision time protocol, and with or without amendments to the header similar to the amendments described above. The grandmasters and respective ports are in this case configured to process them in similar way.

A system comprising the described grandmasters and ECUs connected by the data links using the protocols described above is implemented as well.

In particular a computer program is used for implementing the various steps of the data transmission in the respective components of the system.

## Claims

1. Method of synchronizing clocks of a computer network (100), wherein a first grandmaster (102) sends a first synchronization information (202) addressed to at least a second grandmaster (104), the first synchronization information (202) comprising information about a first subset of grandmasters (104, 106, 108) configured to receive the first synchronization information (202), and wherein a second synchronization information (204), including information about a second subset of grandmasters (102, 106, 108) configured to receive the second synchronization information (204), is transmitted by the second grandmaster (104) to at least one grandmaster of the second subset (102, 106, 108), wherein that the first synchronization information (202) indicates a first time and a second time according to a first time base , trel, and according to a second time base , tabs, of respective clocks of the first grandmaster (102) respectively, and the second synchronization information (204) indicates a third time according to the first time base , trel, of a respective clock of the second grandmaster (104).

2. Method according to claims 1, **characterized in that** the first grandmaster (102) receives the second synchronization information (204) addressed to the first grandmaster (102).

3. The method according to claim 1 or 2, **characterized in that** the information about the first subset of grandmasters and the information about the second subset of grandmasters (102, 106, 108) replaces a domainNumber field according to IEEE 1588-2008 in a corresponding precision time protocol.

4. The method according to any of claims 1 to 3, **characterized in that** the information about the first subset of grandmasters and the information about the second subset of grandmasters (102, 106, 108) comprises an indication for a number of subsets existing in the computer network (100).

5. The method according to any of claims 1 to 3, **characterized in that** a first port of the first grandmaster (102) for sending the first synchronization information (202) is configured as master port for sending or a second port of the first grandmaster (102) for receiving the second synchronization information (204) is configured as slave port for receiving the second synchronization information (204) depending on a time base indicated by a clock of the first grandmaster (102).

6. The method according to any of claims 1 to 5, wherein the first grandmaster (102) sends the first synchronization information (202) addressed to the grandmasters (104, 106, 108) of the first subset of grandmasters (104, 106, 108), the second grandmaster (104) sends the second synchronization information (204) to the second subset of grandmasters (102, 106, 108), and a third grandmaster (108) sends a third synchronization information (208) to a third subset of grandmasters (102, 104, 106), wherein a first port for sending or a second port for receiving synchronization information is configured as master port for sending or slave port for receiving synchronization information, wherein the configuration depends on the time base (trel, tabs).

7. The method according to any of claims 1 to 6, **characterized in that** the third synchronization information (208) indicates a third time according to the second time base (tabs) of a respective clock of the second grandmaster (104).

8. The method according to any of claims 1 to 7, **characterized in that** a configuration of at least one port of a respective grandmaster is selected for sending or receiving from the states:
Master port (230) in first time base (trel) and Master port (245) in second time base (tabs),
Master port (230) in first time base (trel); Slave port (240) second time base (tabs),
Master port (230) in first time base (trel); Master and Slave port (250) second time base (tabs),
Slave port (235) in first time base (trel); Master port (245) in second time base (tabs),
Slave port in in first time base (trel) and second time base (tabs),
Slave port (235) in first time base (trel); Master and Slave port (250) in second time base (tabs),
Master and Slave port (260) in first time base (trel); Master port (245) in second time base (tabs),
Master and Slave port (260) in first time base (trel); Slave port (240) in second time base (tabs),
Master and Slave port (260) in first time base (trel); Master and Slave port (250) in second time base (tabs),
Master port (270) in in first time base (trel),
Slave port in in first time base (trel),
Master port (280) in second time base (tabs),
Slave port in second time base (tabs).

9. System configured to synchronize clocks of a computer network (100), the system comprising a first grandmaster (102) configured to send a first synchronization information (202) addressed to at least a second grandmaster (104), the first synchronization information (202) comprising information about a first subset of grandmasters (104, 106, 108) configured to receive the first synchronization information (202), and wherein a second synchronization information (204), including information about a second subset of grandmasters (102, 106, 108) configured to receive the second synchronization information (204), is transmitted by the second grandmaster (104) to at least one grandmaster of the second subset (102, 106, 108), wherein that the first synchronization information (202) indicates a first time and a second time according to a first time base , trel, and according to a second time base , tabs, of respective clocks of the first grandmaster (102) respectively, and that the second synchronization information (204) indicates a third time according to the first time base , trel, of a respective clock of the second grandmaster (104).

10. A computer readable medium comprising computer executable instructions which, when executed by a computer, cause the computer to carry out the method of any one of claims 1 to 8.

## Patentansprüche

1. Verfahren zum Synchronisieren von Takten eines Computernetzes (100), wobei ein erster Großmeister (102) erste Synchronisationsinformationen (202), die an mindestens einen zweiten Großmeister (104) adressiert sind, sendet, wobei die ersten Synchronisationsinformationen (202) Informationen über eine erste Untergruppe von Großmeistern (104, 106, 108), die konfiguriert sind, die ersten Synchronisationsinformationen (202) zu empfangen, umfassen und wobei zweite Synchronisationsinformationen (204), die Informationen über eine zweite Untergruppe von Großmeistern (102, 106, 108), die konfiguriert sind, die zweiten Synchronisationsinformationen (204) zu empfangen, enthalten, durch den zweiten Großmeister (104) an mindestens einen Großmeister der zweiten Untergruppe (102, 106, 108) gesendet werden, wobei die ersten Synchronisationsinformationen (202) jeweils eine erste Zeit und eine zweite Zeit gemäß einer ersten Zeitbasis, trel, und gemäß einer zweiten Zeitbasis, tabs, jeweiliger Takte des ersten Großmeisters (102) angeben und die zweiten Synchronisationsinformationen (204) eine dritte Zeit gemäß der ersten Zeitbasis, trel, eines jeweiligen Takts des zweiten Großmeisters (104) angeben.

2. Verfahren nach Anspruch 1, **dadurch gekennzeichnet, dass** der erste Großmeister (102) die zweiten Synchronisationsinformationen (204), die an den ersten Großmeister (102) adressiert sind, empfängt.

3. Verfahren nach Anspruch 1 oder 2, **dadurch gekennzeichnet, dass** die Informationen über die erste Untergruppe von Großmeistern und die Informationen über die zweite Untergruppe von Großmeistern (102, 106, 108) ein Bereichsnummernfeld gemäß IEEE 1588-2008 in einem entsprechenden Präzisionszeitprotokoll ersetzen.

4. Verfahren nach einem der Ansprüche 1 bis 3, **dadurch gekennzeichnet, dass** die Informationen über die erste Untergruppe von Großmeistern und die Informationen über die zweite Untergruppe von Großmeistern (102, 106, 108) eine Angabe für eine Anzahl von Untergruppen, die in dem Computernetz (100) vorhanden sind, umfasst.

5. Verfahren nach einem der Ansprüche 1 bis 3, **dadurch gekennzeichnet, dass** ein erster Anschluss des ersten Großmeisters (102) zum Senden der ersten Synchronisationsinformationen (202) als Hauptanschluss zum Senden konfiguriert ist oder ein zweiter Anschluss des ersten Großmeisters (102) zum Empfangen der zweiten Synchronisationsinformationen (204) als Nebenanschluss zum Empfangen der zweiten Synchronisationsinformationen (204) abhängig von einer Zeitbasis, die durch einen Takt des ersten Großmeisters (102) angegeben wird, konfiguriert ist.

6. Verfahren nach einem der Ansprüche 1 bis 5, wobei der erste Großmeister (102) die ersten Synchronisationsinformationen (202), die an die Großmeister (104, 106, 108) der ersten Untergruppe von Großmeistern (104, 106, 108) adressiert sind, sendet, der zweite Großmeister (104) die zweiten Synchronisationsinformationen (204) an die zweite Untergruppe von Großmeistern (102, 106, 108) sendet und ein dritter Großmeister (108) dritte Synchronisationsinformationen (208) an eine dritte Untergruppe von Großmeistern (102, 104, 106) sendet, wobei ein erster Anschluss zum Senden oder ein zweiter Anschluss zum Empfangen von Synchronisationsinformationen als Hauptanschluss zum Senden oder als Nebenanschluss zum Empfangen von Synchronisationsinformationen konfiguriert ist, wobei die Konfiguration von der Zeitbasis (trel, tabs) abhängt.

7. Verfahren nach einem der Ansprüche 1 bis 6, **dadurch gekennzeichnet, dass** die dritten Synchronisationsinformationen (208) eine dritte Zeit gemäß der zweiten Zeitbasis (tabs) eines jeweiligen Takts des zweiten Großmeisters (104) angeben.

8. Verfahren nach einem der Ansprüche 1 bis 7, **dadurch gekennzeichnet, dass** eine Konfiguration mindestens eines Anschlusses eines jeweiligen Großmeisters zum Senden oder Empfangen aus den folgenden Zuständen ausgewählt ist:
Hauptanschluss (230) in erster Zeitbasis (trel) und Hauptanschluss (245) in zweiter Zeitbasis (tabs),
Hauptanschluss (230) in erster Zeitbasis (trel); Nebenanschluss (240) zweite Zeitbasis (tabs),
Hauptanschluss (230) in erster Zeitbasis (trel); Haupt- und Nebenanschluss (250) zweite Zeitbasis (tabs),
Nebenanschluss (235) in erster Zeitbasis (trel); Hauptanschluss (245) in zweiter Zeitbasis (tabs),
Nebenanschluss in erster Zeitbasis (trel) und zweiter Zeitbasis (tabs),
Nebenanschluss (235) in erster Zeitbasis (trel); Haupt- und Nebenanschluss (250) in zweiter Zeitbasis (tabs),
Haupt- und Nebenanschluss (260) in erster Zeitbasis (trel); Hauptanschluss (245) in zweiter Zeitbasis (tabs),
Haupt- und Nebenanschluss (260) in erster Zeitbasis (trel); Nebenanschluss (240) in zweiter Zeitbasis (tabs),
Haupt- und Nebenanschluss (260) in erster Zeitbasis (trel); Haupt- und Nebenanschluss (250) in zweiter Zeitbasis (tabs),
Hauptanschluss (270) in erster Zeitbasis (trel),
Nebenanschluss in erster Zeitbasis (trel),
Hauptanschluss (280) in zweiter Zeitbasis (tabs),
Nebenanschluss in zweiter Zeitbasis (tabs).

9. System, das konfiguriert ist, Takte eines Computernetzes (100) zu synchronisieren, wobei das System Folgendes umfasst:
einen ersten Großmeister (102), der konfiguriert ist, erste Synchronisationsinformationen (202), die an mindestens einen zweiten Großmeister (104) adressiert sind, zu senden, wobei die ersten Synchronisationsinformationen (202) Informationen über eine erste Untergruppe von Großmeistern (104, 106, 108), die konfiguriert sind, die ersten Synchronisationsinformationen (202) zu empfangen, umfassen und wobei zweite Synchronisationsinformationen (204), die Informationen über eine zweite Untergruppe von Großmeistern (102, 106, 108), die konfiguriert sind, die zweiten Synchronisationsinformationen (204) zu empfangen, enthalten, durch den zweiten Großmeister (104) an mindestens einen Großmeister der zweiten Untergruppe (102, 106, 108) gesendet werden, wobei die ersten Synchronisationsinformationen (202) jeweils eine erste Zeit und eine zweite Zeit gemäß einer ersten Zeitbasis, trel, und gemäß einer zweiten Zeitbasis, tabs, jeweiliger Takte des ersten Großmeisters (102) angeben, und dass die zweiten Synchronisationsinformationen (204) eine dritte Zeit gemäß der ersten Zeitbasis, trel, eines jeweiligen Takts des zweiten Großmeisters (104) angeben.

10. Computerlesbares Medium, das computerausführbare Anweisungen umfasst, die dann, wenn sie durch einen Computer ausgeführt werden, bewirken, dass der Computer das Verfahren nach einem der Ansprüche 1 bis 8 ausführt.

## Revendications

1. Procédé de synchronisation d'horloges d'un réseau d'ordinateurs (100), dans lequel une première horloge maître principale (102) envoie une première information de synchronisation (202) adressée à au moins une deuxième horloge maître principale (104), la première information de synchronisation (202) comprenant des informations concernant un premier sous-ensemble d'horloges maîtres principales (104, 106, 108) configurées pour recevoir la première information de synchronisation (202), et dans lequel une deuxième information de synchronisation (204), comportant des informations concernant un deuxième sous-ensemble d'horloges maîtres principales (102, 106, 108) configurées pour recevoir la deuxième information de synchronisation (204), est transmise par la deuxième horloge maître principale (104) à au moins une horloge maître principale du deuxième sous-ensemble (102, 106, 108), dans lequel la première information de synchronisation (202) indique un premier temps et un deuxième temps selon une première base de temps, trel, et selon une deuxième base de temps, tabs, d'horloges respectives de la première horloge maître principale (102), respectivement, et la deuxième information de synchronisation (204) indique un troisième temps selon la première base de temps, trel, d'une horloge respective de la deuxième horloge maître principale (104).

2. Procédé selon la revendication 1, **caractérisé en ce que** la première horloge maître principale (102) reçoit la deuxième information de synchronisation (204) adressée à la première horloge maître principale (102).

3. Procédé selon la revendication 1 ou 2, **caractérisé en ce que** les informations concernant le premier sous-ensemble d'horloges maîtres principales et les informations concernant le deuxième sous-ensemble d'horloges maîtres principales (102, 106, 108) remplacent un champ domainNumber conforme à IEEE 1588-2008 dans un protocole de temps de précision correspondant.

4. Procédé selon l'une quelconque des revendications 1 à 3, **caractérisé en ce que** les informations concernant le premier sous-ensemble d'horloges maîtres principales et les informations concernant le deuxième sous-ensemble d'horloges maîtres principales (102, 106, 108) comprennent une indication concernant un nombre de sous-ensembles existant dans le réseau d'ordinateurs (100).

5. Procédé selon l'une quelconque des revendications 1 à 3, **caractérisé en ce qu'**un premier port de la première horloge maître principale (102) permettant l'envoi de la première information de synchronisation (202) est configuré comme port maître pour l'envoi ou **en ce qu'**un deuxième port de la première horloge maître principale (102) permettant la réception de la deuxième information de synchronisation (204) est configuré comme port esclave pour la réception de la deuxième information de synchronisation (204) en fonction d'une base de temps indiquée par une horloge de la première horloge maître principale (102).

6. Procédé selon l'une quelconque des revendications 1 à 5, dans lequel la première horloge maître principale (102) envoie la première information de synchronisation (202) adressée aux horloges maîtres principales (104, 106, 108) du premier sous-ensemble d'horloges maîtres principales (104, 106, 108), la deuxième horloge maître principale (104) envoie la deuxième information de synchronisation (204) au deuxième sous-ensemble d'horloges maîtres principales (102, 106, 108), et une troisième horloge maître principale (108) envoie une troisième information de synchronisation (208) à un troisième sous-ensemble d'horloges maîtres principales (102, 104, 106), dans lequel un premier port permettant l'envoi ou un deuxième port permettant la réception d'informations de synchronisation est configuré comme port maître pour l'envoi ou comme port esclave pour la réception d'informations de synchronisation, dans lequel la configuration dépend de la base de temps (trel, tabs).

7. Procédé selon l'une quelconque des revendications 1 à 6, **caractérisé en ce que** la troisième information de synchronisation (208) indique un troisième temps selon la deuxième base de temps (tabs) d'une horloge respective de la deuxième horloge maître principale (104).

8. Procédé selon l'une quelconque des revendications 1 à 7, **caractérisé en ce qu'**une configuration d'au moins un port d'une horloge maître principale respective est sélectionnée pour l'envoi ou la réception des états :
port Maître (230) dans la première base de temps (trel) et port Maître (245) dans la deuxième base de temps (tabs),
port Maître (230) dans la première base de temps (trel) ;
port Esclave (240) dans la deuxième base de temps (tabs),
port Maître (230) dans la première base de temps (trel) ;
port Maître et Esclave (250) dans la deuxième base de temps (tabs),
port Esclave (235) dans la première base de temps (trel) ;
port Maître (245) dans la deuxième base de temps (tabs),
port Esclave dans la première base de temps (trel) et dans la deuxième base de temps (tabs),
port Esclave (235) dans la première base de temps (trel) ;
port Maître et Esclave (250) dans la deuxième base de temps (tabs),
port Maître et Esclave (260) dans la première base de temps (trel) ; port Maître (245) dans la deuxième base de temps (tabs),
port Maître et Esclave (260) dans la première base de temps (trel) ; port Esclave (240) dans la deuxième base de temps (tabs),
port Maître et Esclave (260) dans la première base de temps (trel) ; port Maître et Esclave (250) dans la deuxième base de temps (tabs),
port Maître (270) dans la première base de temps (trel),
port Esclave dans la première base de temps (trel),
port Maître (280) dans la deuxième base de temps (tabs),
port Esclave dans la deuxième base de temps (tabs).

9. Système configuré pour synchroniser des horloges d'un réseau d'ordinateurs (100), le système comprenant une première horloge maître principale (102) configurée pour envoyer une première information de synchronisation (202) adressée à au moins une deuxième horloge maître principale (104), la première information de synchronisation (202) comprenant des informations concernant un premier sous-ensemble d'horloges maîtres principales (104, 106, 108) configurées pour recevoir la première information de synchronisation (202), et dans lequel une deuxième information de synchronisation (204), comportant des informations concernant un deuxième sous-ensemble d'horloges maîtres principales (102, 106, 108) configurées pour recevoir la deuxième information de synchronisation (204), est transmise par la deuxième horloge maître principale (104) à au moins une horloge maître principale du deuxième sous-ensemble (102, 106, 108), dans lequel la première information de synchronisation (202) indique un premier temps et un deuxième temps selon une première base de temps, trel, et selon une deuxième base de temps, tabs, d'horloges respectives de la première horloge maître principale (102), respectivement, et la deuxième information de synchronisation (204) indique un troisième temps selon la première base de temps, trel, d'une horloge respective de la deuxième horloge maître principale (104).

10. Support lisible par ordinateur comprenant des instructions exécutables par ordinateur qui, lorsqu'elles sont exécutées par un ordinateur, amènent l'ordinateur à mettre en œuvre le procédé selon l'une quelconque des revendications 1 à 8.
